# EUROPÄISCHE PATENTSCHRIFT

(11) **EP 2 750 931 B1**
(45) Veröffentlichungstag und Bekanntmachung des Hinweises auf die Patenterteilung: **12.10.2016**
(21) Anmeldenummer: 12756099.3
(22) Anmeldetag: 29.08.2012
(51) Int. Cl.: B60R 13/02

(54) **VERFAHREN ZUR HERSTELLUNG EINES VERKLEIDUNGSTEIL**
MANUFACTURING PROCESS OF A COVERING
PROCÉDÉ DE FABRICATION DU DIT REVÊTEMENT

(30) Priorität: 01.09.2011 DE 102011112135
(43) Veröffentlichungstag der Anmeldung: 09.07.2014
(73) Patentinhaber: Audi AG, 85045 Ingolstadt (DE)
(72) Erfinder: HOCH, Johanna, 85051 Ingolstadt (DE)
(74) Vertreter: Brandt, Kai
(86) Internationale Anmeldenummer: PCT/EP2012/003619
(87) Internationale Veröffentlichungsnummer: WO 2013/029783

(56) Entgegenhaltungen:
- EP-A1- 1 346 879
- DE-A1-102007 028 711
- DE-A1-102007 031 334
- DE-A1-102009 036 680
- FR-A1- 2 868 733

## Beschreibung

Die Erfindung betrifft ein Verfahren zur Herstellung eines Verkleidungsteils nach der im Oberbegriff von Anspruch 1 näher definierten Art.

Ein solches Verfahren ist aus dem Dokument DE102007028711 A1 bekannt.

Aus der DE 10 2007 031 334 A1 ist ein Innenverkleidungsteil für ein Kraftfahrzeug bekannt, das einen Grundkörper und an dem Grundkörper angebrachte Leisten aufweist, die aus rutschhemmendem Material, wie beispielsweise EPDM, bestehen können.

Die EP 1 346 879 A2 beschreibt eine Einstiegsleiste für einen Kraftfahrzeugschweller, die einen Grundkörper und mehrere über den Grundkörper überstehende Gummileisten aufweist. Dadurch soll die Rutschsicherheit der Einstiegsleiste verbessert werden.

Ein Dekorteil mit einer mehrteiligen Oberfläche, deren Oberflächenteile sich gegenseitig durchdringen, ist aus der DE 10 2007 028 711 A1 bekannt. Dort ist auch beschrieben, dass es möglich ist, die Dekorplatte mit einer Spritzgussmasse zu hinterspritzen.

Die FR 2 868 733 A1 beschreibt ein als innere Auskleidung eines Automobils geeignetes Material, das ein dekoratives Holzblatt mit einer Deckschicht aus einem durchscheinenden thermoplastischen Material auf der sichtbaren Seite und einer thermoplastischen Deckschicht auf der Rückseite aufweist.

Ein weiteres Verkleidungsteil ist aus der DE 299 12 270 U1 bekannt. Insbesondere in Kraftfahrzeugen der Mittel- und Oberklasse werden wegen ihrer optisch und haptisch hochwertigen Wirkung im Innenraum sehr häufig Holzwerkstoffe eingesetzt. Meist handelt es sich dabei um in einer vertikalen oder wenigstens annähernd vertikalen Ebene angeordnete Verkleidungsteile, da Holzoberflächen meist sehr glatt sind und auf einer waagrechten Holzoberfläche angeordnete Gegenstände sehr leicht verrutschen und dabei auch die Holzoberfläche beschädigen können.

Die DE 10 2009 036 680 A1 beschreibt eine Kraftfahrzeug-Innenraumverkleidung mit einem Holz- oder Furnierelement, das eine Kaschierung und ein die Kaschierung durchdringendes Stickmuster aufweist. Das Stickmuster soll dem Holz- oder Furnierelement eine dekorative Oberfläche verleihen. Allerdings handelt es sich dabei um ein sehr aufwändiges Verfahren, das hohe Kosten verursacht und daher nur bei im obersten Preissegment angesiedelten Fahrzeugen eingesetzt werden kann.

Es ist daher Aufgabe der vorliegenden Erfindung, ein Verfahren zur Herstellung eines Verkleidungsteils zu schaffen, das mit verhältnismäßig geringem Aufwand verbunden ist.

Erfindungsgemäß wird diese Aufgabe durch die in Anspruch 1 genannten Merkmale gelöst.

Dieses Verfahren stellt eine besonders einfache und für die Serienfertigung geeignete Möglichkeit zur Herstellung des Verkleidungsteils dar, mit dem die Vorteile im Hinblick auf die verbesserte Haftung und das sich daraus ergebende Verbleiben von Gegenständen auf dem Verkleidungsteil auch während der Fahrt erreicht werden können.

Durch das Verfahren erhält man ein Verkleidungsteil, bei dem die rutschhemmenden Elemente in Längsrichtung über den gesamten Grundkörper verlaufen und erst an den Kanten desselben enden.

Vorteilhafte Ausgestaltungen und Weiterbildungen der Erfindung ergeben sich aus den Unteransprüchen. Nachfolgend ist ein Ausführungsbeispiel der Erfindung anhand der Zeichnung prinzipmäßig dargestellt.

Es zeigt:
- Fig. 1: eine Draufsicht auf ein erfindungsgemäßes, im Innenraum eines Kraftfahrzeugs verbautes Verkleidungsteil;
- Fig. 2: einen Schnitt nach der Linie II-II aus Fig. 1;
- Fig. 3: einen ersten Zustand des Verkleidungsteils bei einem erfindungsgemäßen Verfahren zur Herstellung desselben; und
- Fig. 4: einen zweiten Zustand des Verkleidungsteils bei einem erfindungsgemäßen Verfahren zur Herstellung desselben.

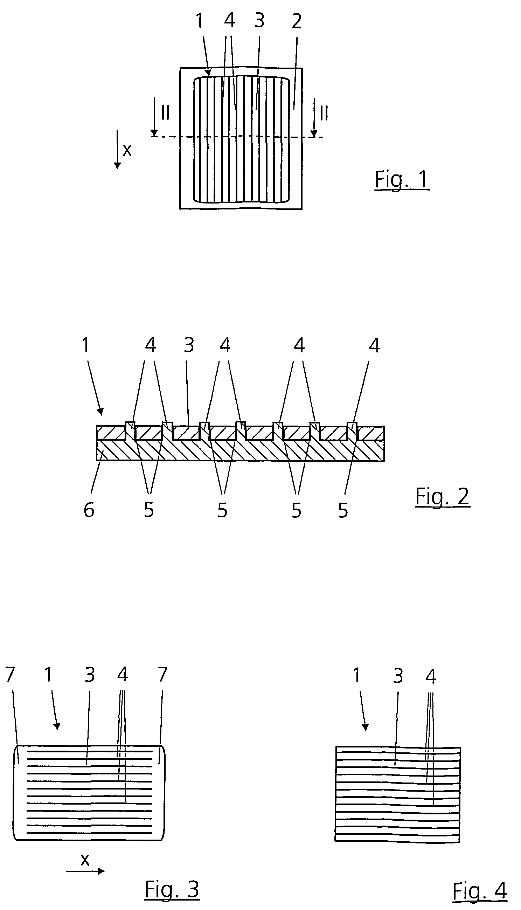

Fig. 1 zeigt eine Draufsicht auf ein Verkleidungsteil 1, das insbesondere für den Innenraum eines in seiner Gesamtheit nicht dargestellten Kraftfahrzeugs vorgesehen ist. Das Verkleidungsteil 1 ist im vorliegenden Fall als Auflagefläche einer sehr schematisch dargestellten Mittelkonsole 2 des Kraftfahrzeugs ausgebildet und in einer im Wesentlichen horizontal ausgerichteten Ebene angeordnet. Prinzipiell ist es jedoch möglich, das Verkleidungsteil 1 auch an anderen Stellen des Innenraums anzubringen und in einer anders ausgerichteten Ebene anzuordnen.

Aus Fig. 1 geht hervor, dass das Verkleidungsteil 1 einen Grundkörper 3 aufweist, der im vorliegenden Fall aus einem Holzwerkstoff, beispielsweise aus einem Furnier, besteht. Auf der Oberfläche des Grundkörpers 3 befinden sich mehrere, in der mit "x" bezeichneten Längsrichtung parallel zueinander verlaufende, rutschhemmende Elemente 4, die eine höhere Haftreibung aufweisen als die Oberfläche des Grundkörpers 3. Die rutschhemmenden Elemente 4 sind also in Form von wenigstens annähernd gerade verlaufenden Streifen ausgebildet, so dass sich der optische Eindruck eines Schichtfurniers ergibt. Vorzugsweise bestehen die rutschhemmenden Elemente 4 aus einem gummiartigen Kunststoff, der für eine ausreichende Haftung von auf der Oberfläche des Verkleidungsteils 1 gelagerten Gegenständen sorgt. Es kommen jedoch auch andere, insbesondere adhäsive, Materialien für die rutschhemmenden Elemente 4 in Frage, um eine höhere Haftung zu erzielen als diejenige der Oberfläche des Grundkörpers 3.

In Fig. 2 ist erkennbar, dass der Grundkörper 3 mehrere nebeneinander angeordnete, schlitzartige Ausnehmungen 5 aufweist, in denen die rutschhemmenden Elemente 4 angeordnet sind. Im vorliegenden Fall ist der Grundkörper 3 mit dem die rutschhemmenden Elemente 4 bildenden Material hinterspritzt und die rutschhemmenden Elemente 4 durchdringen die Ausnehmungen 5. Dabei sind sämtliche rutschhemmenden Elemente 4 über einen Trägerkörper 6, der sich hinter dem Grundkörper 3 des Verkleidungsteils 1 befindet, miteinander verbunden Der Trägerkörper 6 verleiht dem Verkleidungsteil 1 einen gewissen Zusammenhalt. Aus dem Schnitt gemäß Fig. 2 geht des Weiteren hervor, dass die rutschhemmenden Elemente 4 über die Oberfläche des Grundkörpers 3 überstehen, so dass sich eine besonders gute Haftwirkung ergibt.

Bei der Herstellung des Verkleidungsteils 1 werden prinzipiell an dem Grundkörper 3 die rutschhemmenden Elemente 4 angebracht, wobei vorzugsweise der Grundkörper 3 mit dem die rutschhemmenden Elemente 4 bildenden Werkstoff hinterspritzt wird. Der die rutschhemmenden Elemente 4 bildende Werkstoff durchdringt die Ausnehmungen 5 und es wird vorzugsweise so viel Werkstoff hinterspritzt, dass die rutschhemmenden Elemente 4 über die Oberfläche des Grundkörpers 3 überstehen. Hierzu kann der Grundkörper 3 in eine nicht dargestellte Form eingelegt werden, welche entsprechende Ausnehmungen zur Aufnahme des Materials aufweist, welches die rutschhemmenden Elemente 4 bildet. Im vorliegenden Fall, in dem sämtliche rutschhemmenden Elemente 4 über den Trägerkörper 6 miteinander verbunden sind, wird der Grundkörper 3 auch mit dem den Trägerkörper 6 bildenden Werkstoff, vorzugsweise mit einem gummiartigen Kunststoff, hinterspritzt.

Vorzugsweise werden vor dem Hinterspritzen des Grundkörpers 3 die Ausnehmungen 5 in denselben eingebracht, beispielsweise mittels Fräsen oder einem anderen geeigneten Verfahren. Anschließend werden die rutschhemmenden Elemente 4 in die Ausnehmungen 5 eingebracht.

Aus Fig. 3 geht hervor, dass der Grundkörper 3 jeweilige, in Längsrichtung x über die Ausnehmungen 5 überstehende Ränder 7 aufweist, welche nach dem Einbringen der rutschhemmenden Elemente 4 in die Ausnehmungen 5 abgetrennt werden, was beispielsweise mittels Sägen oder Fräsen durchgeführt werden kann. Dadurch erhält man das in Fig. 4 dargestellte Verkleidungsteil 1, bei dem die rutschhemmenden Elemente 4 in Längsrichtung x über den gesamten Grundkörper 3 verlaufen und erst an den Kanten desselben enden.

## Patentansprüche

1. Verfahren zur Herstellung eines Verkleidungsteils (1), insbesondere für den Innenraum eines Kraftfahrzeugs, wobei an einem aus einem Holzwerkstoff bestehenden Grundkörper (3) rutschhemmende Elemente (4) angebracht werden, die eine höhere Haftreibung aufweisen als die Oberfläche des Grundkörpers (3), wobei in den Grundkörper (3) Ausnehmungen (5) eingebracht werden, wobei die rutschhemmenden Elemente (4) in die Ausnehmungen (5) eingebracht werden, und wobei der Grundkörper (3) jeweilige, in Längsrichtung über die Ausnehmungen (5) überstehende Ränder (7) aufweist, **dadurch gekennzeichnet, dass** die Ränder nach dem Einbringen der rutschhemmenden Elemente (4) in die Ausnehmungen (5) abgetrennt werden.

2. Verfahren nach Anspruch 1,
**dadurch gekennzeichnet, dass**
der Grundkörper (3) mit dem die rutschhemmenden Elemente (4) bildenden Werkstoff hinterspritzt wird, wobei der die rutschhemmenden Elemente (4) bildende Werkstoff die Ausnehmungen (5) durchdringt.

## Claims

1. Method for producing a trim part (1), in particular for the interior of a motor vehicle, wherein on a main body (3) formed of a wood-based material anti-slip elements (4) are attached, having a greater static friction than the surface of the main body (3), wherein in the main body (3) recesses (5) are formed, wherein the anti-slip elements (4) are introduced into the recesses (5), and wherein the main body (3) has edges (7) which protrude beyond the recesses (5) in the longitudinal direction, **characterised in that** the edges are severed following introduction of the anti-slip elements (4) into the recesses (5).

2. Method according to claim 1, **characterised in that** the main body (3) is back-moulded with the material which forms the anti-slip elements (4), wherein the material which forms the anti-slip elements (4) penetrates the recesses (5).

## Revendications

1. Procédé de fabrication d'une pièce d'habillage (1), notamment pour l'intérieur d'un véhicule automobile, des éléments antidérapants (4) étant placés sur un corps de base (3) en un matériau dérivé du bois, lesquels éléments antidérapants ont une adhérence supérieure à celle de la surface du corps de base (3), des évidements (5) étant pratiqués dans le corps de base (3), les éléments antidérapants (4) étant placés dans les évidements (5) et le corps de base (3) comportant des bords (7) respectifs qui dépassent des évidements (5) dans le sens de la longueur,
**caractérisé en ce qu'**on coupe les bords après la mise en place des éléments antidérapants (4) dans les évidements (5).

2. Procédé selon la revendication 1, **caractérisé en ce qu'**on injecte le matériau formant les éléments antidérapants (4) par derrière le corps de base (3), le matériau qui forme les éléments antidérapants (4) traversant alors les évidements (5).
